## Europäisches Patentamt

## European Patent Office

## Office européen des brevets

(19) 

(11) Veröffentlichungsnummer : **0 136 445**
**B1**

(12)

# EUROPÄISCHE PATENTSCHRIFT

(45) Veröffentlichungstag der Patentschrift :
**11.11.87**

(21) Anmeldenummer : **84108754.7**

(22) Anmeldetag : **24.07.84**

(51) Int. Cl.⁴ : **G 11 B  7/26**, G 11 B 23/00//
**B23Q41/02**

(54) **Transportsystem.**

(30) Priorität : **27.07.83 DE 3327121**

(43) Veröffentlichungstag der Anmeldung :
**10.04.85 Patentblatt 85/15**

(45) Bekanntmachung des Hinweises auf die Patenterteilung : **11.11.87 Patentblatt 87/46**

(84) Benannte Vertragsstaaten :
**AT BE CH DE FR GB IT LI LU NL SE**

(56) Entgegenhaltungen :
**EP-A- 0 044 827**
**DE-A- 2 259 731**
**DE-A- 2 321 259**
**DE-C-   735 384**
**FR-A- 2 284 930**
**US-A- 3 745 314**
**US-A- 3 854 889**
**US-A- 3 862 815**
**PATENTS ABSTRACTS OF JAPAN, Band 7, Nr. 87(P-**
**190)(1232), 12. April 1983**
**PATENTS ABSTRACTS OF JAPAN, Band 4, Nr. 35(P-**
**3)(517), 25. März 1980, Seite 104P3**
**PATENTS ABSTRACTS OF JAPAN, Band 6, Nr. 38(P-**
**105)(916), 9. März 1982**

(73) Patentinhaber : **POLYGRAM GmbH**
**Glockengiesserwall 3**
**D-2000 Hamburg 1 (DE)**

(72) Erfinder : **Drechsler, Klaus Dieter, Ing. grad.**
**Süntel Weg 7**
**D-3057 Neustadt 1 (DE)**
Erfinder : **Heuer, Werner, Ing.-grad.**
**Steinstrasse 51**
**D-3160 Lehrte (DE)**
Erfinder : **Tiebel, Rainer, Ing. grad.**
**Eichenweg 2**
**D-3001 Schulenburg (DE)**

(74) Vertreter : **Meier, Friedrich, Dipl.-Ing. et al**
**Philips Patentverwaltung GmbH Wendenstrasse 35**
**Postfach 10 51 49**
**D-2000 Hamburg 1 (DE)**

## Beschreibung

Die Erfindung bezieht sich auf eine Transporteinrichtung zur Durchführung der Massenherstellung von plattenförmigen Informationsträgern hoher Speicherdichte, insbesondere digitale, optische auslesbare Audioplatten (CD), unter Verwendung von die Werkstücke Plattenmagazinen aufnehmenden, die auf Transportwagen oder Transportbändern von Arbeitsstation zu Arbeitsstation verfahrbar sind.

Durch die Literaturstelle Funktechnik 37 (1982), Heft 12, Seiten 502 bis 504, insbesondere Seite 503 wird die Produktion der Compact Disc (CD) beschrieben, bei der von einem solchen Transportsystem Gebrauch gemacht wird. Die Information, die auf einer solchen CD in Form einer Spiralspur aufgebracht ist, weist außerordentlich kleine Abmessungen in der Größenordnung von 1 μm auf, um auf einer solchen einen Durchmesser von 12 cm aufweisenden Platte eine hohe Informationsaufzeichnungsdichte zu erreichen. Da diese Informationen mit normalen Augen bzw. werkstattüblichen optischen Geräten nicht erkennbar ist, muß sichergestellt werden, daß im Zuge der Fertigung plattenförmige Werkstücke mit unterschiedlicher Information mit hoher Sicherheit getrennt gehalten werden, da ansonsten ein einwandfreier Fertigungsablauf nicht aufrechterhalten werden kann.

Der Erfindung liegt die Aufgabe zugrunde, für die Massenfertigung solcher plattenförmigen Informationsträger hoher Speicherdichte ein Transportsystem der einleitend beschriebenen Art so auszugestalten, daß auch Lose, deren plattenförmigen Werkstücke unterschiedlichen Informationsinhalt aufweisen, bei gleichzeitigem Vorhandensein innerhalb des Herstellungsablaufs mit Sicherheit voneinander getrennt bleiben und zwar ohne daß hierdurch der Fertigungsablauf verzögert wird.

Diese Aufgabe wird durch die im Kennzeichen des Patentanspruchs 1 angegebenen Merkmale gelöst.

Es ist am der JP-A-5 381 683 an sich bekannt, eine Kennungsplatte in einem Plattenstapel einzufügen, um eine Referenzposition für die die Positionierung zu schaffen und den Zugriff zu erleichtern. Die Kennplatte ist durch eine unterschiedliche Farbe gekennzeichnet.

Bei der Erfindung wird von der Erkenntnis ausgegangen, daß eine klare Trennung zwischen verschiedenen Losen dadurch gewährleistet werden kann, wenn jedes Los auf eine Reihe von Plattenmagazinen aufgeteilt wird und die jeweils einem Plattenmagazin zugeordneten Werkstücke anfangend von der den Plattenrohling herstellenden Arbeitsstation bis zum Packautomaten für die fertigen Platten in der einmal gegebenen Reihenfolge zugeordnet bleiben. Durch die erfindungsgemäße Zuordnung jeweils einer Kennungsplatte zu einem Werkstückstapel in einem Plattenmagazin läßt sich die fest vorgegebene Rangordnung eines Werkstückstapels in außerordentlich einfacher Weise ohne zusätzliche Maßnahmen und ohne Verzögerung des Fertigungsablaufs mit hoher Zuverlässigkeit über sämtliche Arbeitsstationen hinweg aufrechterhalten. Eine besonders zweckmäßige Ausführung eines Plattenmagazins ist im Patentanspruch 2 angegeben.

Die an erster Stelle im Werkstückstapel eines Plattenmagazins angeordnete Kennungsplatte wird zweckmäßig auf der Eingangsseite einer Arbeitsstation mittels einer Leseeinrichtung abgefragt, von der eine bevorzugte Ausführungsform im Patentanspruch 3 angegeben ist.

Zweckmäßige Ausgestaltungen der Kennungsplatte sind in den Patentansprüchen 4 bis 6 angegeben.

Anhand eines in der Zeichnung dargestellten Ausführungsbeispiels soll die Erfindung im folgenden noch näher erläutert werden. In der Zeichnungen bedeuten

Fig. 1 ein Plattenmagazin,
Fig. 2 die Aufsicht auf eine Kennungsplatte,
Fig. 3 die schematische Darstellung einer Leseeinrichtung für eine Kennungsplatte nach Fig. 2,
Fig. 4 die schematische Darstellung eines Fertigungsablaufs für die Herstellung einer CD.

Das Plattenmagazin 1 besteht aus zwei Wandteilen 2 und 3, die zueinander parallel im Abstand des Durchmessers eines plattenförmigen Werkstücks angeordnet sind. Die Wandteile stellen mit ihren Breitseiten die Ober- und Unterseite und mit ihren Schmalseiten die Vorder- und Rückseite des Plattenmagazins dar. Die unteren Breitseiten der Wandteile 2 und 3 sind im Randbereich über stiftförmige Abstandshalter 4 gegeneinander fixiert. Weiterhin weist jedes Wandteil an der unteren Breitseite in der Nähe der Rückseite und der Rückseite des von den Wandteilen gebildeten Magazins Aussparungen 5 für den Eingriff eines Zapfens auf, der hierbei im Bereich der Eingangsseite einer Arbeitsstation vorhanden ist und dafür sorgt, daß das Plattenmagazin 1 in waagrechter, schräger oder senkrechter Stellung für die Entnahme der Werkstücke die vorgegebene Ausrichtung aufweist.

Die Wandteile 2 und 3 weisen auf ihren einander gegenüberliegenden Innenseiten parallel zu den Schmalseiten verlaufende Führungsnuten 6 auf.

In die von oben die plattenförmigen Werkstücke 7 eingeführt werden. Die Werkstücke 7 laufen dabei gegen einen Anschlag 8, der auf der Innenseite der Wandteile 2 und 3 im unteren Bereich senkrecht zu den Führungsnuten 6 angeordnet ist und beim Ausführungsbeispiel die Form eines Rundstabes hat.

Die in ihrer Gesamtheit ein Werkstückstapel 9 bildenden plattenförmigen Werkstücke 7 sind durch die Kennungsplatte 10 ergänzt, die in ihren Abmessungen den Werkstücken angepaßt ist und in der durch das Plattenmagazin vorgegebenen Ordnung der Reihenfolge den ersten Platz einnimmt. Die Kennungsplatte 10 weist wie die übrigen plattenförmigen Werkstücke eine konzentrische Bohrung 11 auf und unterscheidet sich von den Werkstücken 7 im wesentlichen durch drei auf einem konzentrischen Kreis angeordnete Langlöcher 12, die zur Kennung der Kennungsplatte zur Beginn des Abarbeitens des Werkstückstapels 9 eines Plattenmagazins an einer Arbeitsstation mittels einer Lesevorrichtung dienen.

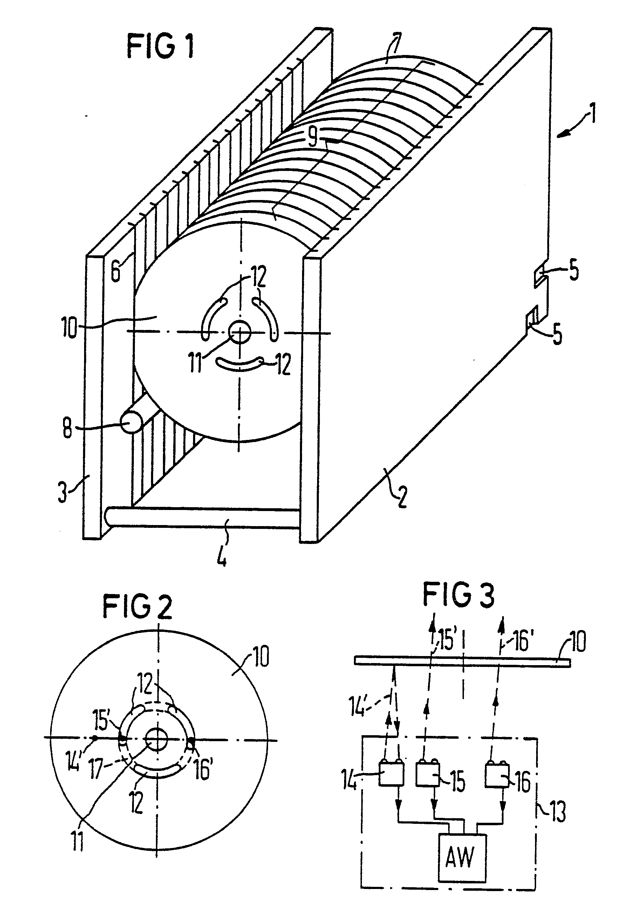

Das Lesegerät und seine Wirkungsweise soll nun anhand der Fig. 2 und 3 näher erläutert werden. Fig. 2 zeigt nochmals die Kennungsplatte 10 mit der zentralen Bohrung 11 und den Langlöchern 12. Senkrecht unter der Kennungsplatte 10 ist, wie Fig. 3 zeigt, die Leseeinrichtung 13 angeordnet. Sie weist drei in Reflexion arbeitende Lichtschranken 14, 15 und 16 auf, die ausgangsseitig mit einer Auswerteeinrichtung AW verbunden sind. Die Lichtschranken 14, 15 und 16 sind nebeneinander auf einem Durchmesser der Kennungsplatte 10 angeordnet, wobei die Lichtschranken 15 und 16 hinsichtlich der Rotationsachse der Kennungsplatte 10 symmetrisch in einem Abstand angeordnet sind, der durch den Abstand der Langlöcher 12 von der Rotationsachse der Kennungsplatte 10 vorgegeben ist. Die weitere Lichtschranke 14 weist von der Rotationsachse den größten Abstand auf.

Die Lichtschranken 14, 15 und 16 bestehen jeweils aus einem Lichtsender und einem Lichtempfänger in Form einer Lumineszenz- und einer Fotodiode. Die Kennungsplatte 10 weist ihrerseits eine reflektierende Oberfläche auf, die abgesehen von der zentralen Bohrung 11 lediglich durch die Langlöcher 12 unterbrochen ist. Die Langlöcher 12, die gemeinsam in einer konzentrischen Ringzone 17 angeordnet sind, sind so bemessen, daß unabhängig von der Drehstellung der Kennungsplatte wenigstens ein Lichstrahl eines der Lichtsender der Lichtschranken 15 und 16 im Bereich eines Langlochs 12 liegt. Bei der in Fig. 2 dargestellten Drehstellung der Kennungsplatte 10 befinden sich die Lichtstrahlen 15' und 16' der Lichtschranken 15 und 16 im Bereich von zwei Langlöchern 12, so daß diese Lichtschranken, die hier in Reflexion arbeiten, nicht geschlossen sind. Der Lichstrahl 14' der Lichtschranke 14 wird an der reflektierenden Oberfläche der Kennungsplatte 10 reflektiert und kehrt zum Lichtempfänger zurück. Die Lichtschranke 14 ist also geschlossen, während die Lichtschranken 15 und 16 offen sind. Die Auswerteeinrichtung AW wertet nun abhängig davon, ob Lichtschranken geöffnet oder geschlossen sind, die Kennungsplatte 10 aus. Eine Kennungsplatte liegt immer dann vor, wenn die Lichtschranke 14 und wenigstens eine der Lichtschranken 15 oder 16 geschlossen sind. Keine Kennungsplatte liegt vor, wenn keine der Lichtschranken geschlossen ist. Die Leseeinrichtung 13 kann auch zur Überprüfung des Vorhandenseins oder Nichtvorhandenseins eines plattenförmigen Werkstücks unter Berücksichtigung der Tatsache ebenfalls verwendet werden, daß unabhängig davon, ob die Werkstücke bereits mit einer reflektierenden Oberfläche oder nicht versehen sind, die Ansprechempfindlichkeit der Lichtschranken so groß bemessen wird, daß auch bei nur teilweiser Reflexion der Lichtstrahlen an der Informationsschicht die Lichtschranken sich schließen. Das bedeutet, daß ein zu bearbeitendes Werkstück vorliegt, wenn alle drei Lichtschranken 14, 15 und 16 einen geschlossenen Zustand anzeigen.

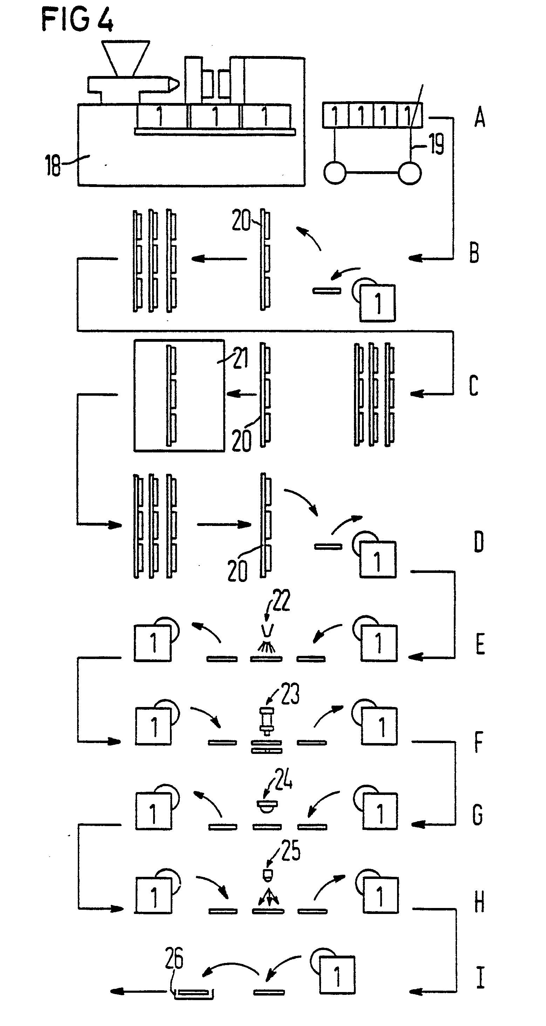

Bei dem in Fig. 4 dargestellten Fertigungsablauf für die Massenherstellung von CD muß das Transportsystem neun Arbeitsstationen miteinander verbinden. Die von der Spritz-Preßmaschine 18 auf der Arbeitsstation A mit den Plattenrohlingen angefüllten Plattenmagazine 1 werden auf Transportwagen 18 verladen und hier zu Losen mit Werkstücken gleichen Informationsinhaltes zusammengefaßt. Jedes Plattenmagazin erhält zusätzlich an erster Stelle des hierin unterzubringenden Werkstückstapels eine Kennungsplatte 10.

Von der Arbeitsstation A werden die Plattenmagazine auf dem Transportwagen 19 zur Arbeitsstation B gebracht, wo die Magazine in der richtigen Ausrichtung automatisch nacheinander entladen und auf Substratbleche aufgebracht werden. Die mit den plattenförmigen Werkstücken beladenen Substratbleche werden dann automatisch zur Arbeitsstation C verfahren, in eine Sputteranlage 21 eingebracht, in der die Werkstücke auf seiten der eingeprägten Information mit einer reflektierenden Metallschicht versehen werden. Die aus der Sputteranlage 21 kommenden Substratbleche 20 werden mit den plattenförmigen Werkstücken sodann zur Arbeitsstation D verfahren, wo die Substratbleche automatisch entladen und die Werkstücke in der vorgegebenen Aufeinanderfolge wiederum in die Plattenmagazine 1 eingelegt werden. Zweckmäßig wird die jeweils die erste Platte darstellende Kennungsplatte auf den Substratblechen durch die Sputteranlage hindurch mitgeführt, so daß zwischen dem Entladen der Plattenmagazine 1 auf der Arbeitsstation B und dem Wiederbeladen der Plattenmagazine auf der Arbeitsstation D keine Diskontinuität vorhanden ist.

Von der Arbeitsstation D gelangen die Plattenmagazine 1 nun zur Arbeitsstation E, wo eine Schutzlackierung mittels einer Lackiervorrichtung 22 vorgenommen wird. Der Transport der Werkstücke durch die Arbeitsstation E erfolgt auf einem Luftkissenförderband. Nachdem die schutzlackierten Werkstücke wieder in der vorgegebenen Reihenfolge mit der Kennungsplatte an erster Stelle auf der Ausgangsseite der Arbeitsstation E in das Plattenmagazin 1 eingelegt sind, wird das Plattenmagazin zur nächsten Arbeitsstation F verfahren, die eine Lochstanze 23 für das Mittelloch darstellt. Der Durchlauf durch diese Arbeitsstation erfolgt wiederum mittels eines Luftkissenförderbandes. Auch hier werden die Werkstücke des Werkstückstapels in der vorgegebenen Reihenfolge auf der Eingangsseite automatisch aus dem Magazin herausgenommen und auf der Ausgangsseite wieder automatisch in ein Plattenmagazin 1 eingelegt.

An die Arbeitsstation F schließt sich die Arbeitsstation G an, in der auf der schutzlackierten Seite der Werkstücke das Etikett mit einem Farbdrucker 24 aufgedruckt wird. Der Durchlauf durch die Etikettiereinrichtung erfolgt teilweise auf einem Luftkissenförderband und teilweise auf einem Gliederband mit Aufnahmepositionen. Die vorletzte Arbeitsstation H dient der Endkontrolle mittels einer optischen Einrichtung. Der Transport der nun bereits fertigen CD durch diese Arbeitsstation H erfolgt wiederum mittels eines Luftkissenförderbandes. Nachdem die Platten die Endkontrolle passiert haben und wiederum in der vorgegebenen Reihenfolge in das Plattenmagazin 1 eingelegt sind, erfolgt in der letzten Arbeitsstation I das Verpacken der Platten, das wiederum automatisch erfolgt, wobei auch hier die Platten in der vorgegebenen Reihenfolge wiederum aus dem Plattenmagazin 1 heraus in die Verpackungsbehälter 26 wandern.

Beim Durchlauf durch die Arbeitsstationen B bis I wird zu Beginn der Entladung eines Plattenmagazins stets die Kennungsplatte überprüft und die weitere Entladung eines Plattenmagazins nur durchgeführt, wenn die Kennungsplatte vorhanden ist. Ferner ist es zweckmäßig, die zu einem Los gehörenden Plattenmagazine jeweils mit einer Begleitkarte zu versehen, die die Codezahl für den Informationsinhalt dieser Werkstücke enthält.

**Patentansprüche**

1. Transporteinrichtung zur Durchführung der Massenherstellung von plattenförmigen Informationsträgern hoher Speicherdichte, insbesondere digitale, optisch auslesbare Audioplatten (CD), unter Verwendung von die Werkstücke aufnehmenden Plattenmagazinen, die auf Transportwagen oder Transportbändern von Arbeitsstation zu Arbeitsstation verfahrbar sind, dadurch gekennzeichnet, daß die kastenförmigen, an ihren Innenseiten mit einander parallelen Führungsnuten (6) für die Aufnahme der plattenförmigen Werkstücke (7) gestalteten offenen Plattenmagazine (1) durch zusätzliche Anordnung von Paßteilen (5), beispielsweise Zapfen oder Aussparungen, eine für sämtliche Arbeitsstationen (A, B ... I) fest vorgegebene Bearbeitungsfolge für die sie enthaltenden Werkstückstapel (9) aufweisen, daß ferner jeder Werkstückstapel und damit jedes einen Werkstückstapel in sich aufnehmende Plattenmagazin eine der Form eines Werkstücks angepaßte Kennungsplatte (10) enthält, die hierbei die erste Stelle in der fest vorgegebenen Rangordnung eines Werkstückstapels innerhalb eines Plattenmagazins einnimmt und daß auf einer Arbeitsstation eingangsseitig zuerst die Kennungsplatte zu ihrer Abfrage mittels einer Leseeinrichtung (13) und anschließend die Werkstücke zur Bearbeitung in der festen Rangfolge des Werkstückstapels aus einem Plattenmagazin nacheinander entnommen und ausgangsseitig die Kennungsplatte und die Werkstücke in der gleichen Reihenfolge wiederum in ein Plattenmagazin eingelegt sind.

2. Transportsystem nach Anspruch 1, dadurch gekennzeichnet, daß ein kastenförmiges Plattenmagazin (1) aus zwei parallel im Abstand des Plattendurchmessers der Werkstücke (7) zueinander angeordneten, die Führungsnuten (6) aufweisenden Wandteilen (2, 3) besteht, deren Breitseiten die Unter- und Oberseite und deren Schmalseiten die Vorder- und Rückseite des Plattenmagazins bilden, daß ferner die miteinander fluchtenden inneren Führungsnuten der Wandteile parallel zu den Schmalseiten verlaufen und die Wandteile im Randbereich der unteren Breitseiten durch Abstandshalter (4) gegeneinander fixiert sind und daß die an der Oberseite des Plattenmagazins in die Führungsnuten einführbaren plattenförmigen Werkstücke (7) gegen einen Anschlag (8) in Gestalt eines an der Innenseite der Wandungsteile senkrecht zu den Führungsnuten angeordneten Stabs auflaufen.

3. Transportsystem nach Anspruch 1 oder 2, dadurch gekennzeichnet, daß die die Kennung der Kennungsplatte (10) abtastende Leseeinrichtung (13) als Abtaster drei Lichtschranken (14, 15, 16) aufweist, von denen zwei Lichtschranken (15, 16) einem die eigentliche Kennung aufweisenden Zonenbereich zugeordnet sind, während die dritte Lichtschranke (14) auf einen Bereich der Kennungsplatte außerhalb dieses Zonenbereichs ausgerichtet ist.

4. Transportsystem nach Anspruch 1 oder 2, dadurch gekennzeichnet, daß der die Kennung auf der Kennungsplatte (10) aufweisende Zonenbereich eine konzentrische Ringzone (17) ist, die sich in Umfangsrichtung wechselweise aus kürzeren und längeren Zonenabschnitten stark unterschiedlicher Lichtdurchlässigkeit solcher Gestaltung zusammensetzt, daß von zwei im gegenseitigen Abstand eines Ringzonendurchmessers konzentrisch zur Kennungsplatte und senkrecht zur Ebene der Kennungsplatte angeordneten Lichtschranken (15, 16) wenigstens eine unabhängig von der Drehstellung der Kennungsplatte geschlossen bzw. geöffnet ist.

5. Transportsystem nach Anspruch 4, dadurch gekennzeichnet, daß die Kennungsplatte (10) eine lichtreflektierende Oberfläche aufweist und daß lediglich die längeren Zonenabschnitte der Ringzone (17) lichtdurchlässig sind.

6. Transportsystem nach Anspruch 4 oder 5, dadurch gekennzeichnet, daß die längeren Zonenabschnitte der Ringzone (17) Langlöcher (12) sind.

**Claims**

1. Transport device for carrying out the mass-production of disc-shaped high-storage-density information carriers, in particular optically readable digital audio discs (CDs), using disc magazines which hold the workpieces and which can be transferred from work station to work station on trolleys or conveyor belts, characterized in that the box-shaped open disc magazines (1), which at their inner sides are formed with mutually parallel guide slots (6) for receiving the disc-shaped workpieces (7), exhibit a predetermined processing sequence for the workpiece stacks (9) contained in said magazines, which sequence is fixed for all the work stations (A, B ... I) by the additional provision of alignment elements (5), for example pins or recesses, in that further each workpiece stack and hence each disc magazine holding a workpiece stack contains an identification disc (10) adapted to the shape of a workpiece, which identification disc occupies the first position within the fixed predetermined sequence of a workpiece stack inside a disc magazine, and in that at a work station at its input side first the identification disc is removed in order to be scanned by a scanning device (13) and subsequently the workpieces are successively removed from a disc magazine in order to be processed in the fixed sequence of the workpiece stack and at the output side the identification disc and the workpieces are re-inserted into a disc magazine in the same magazine.

2. A transport device as claimed in Claim 1, characterized in that a box-shaped disc magazine (1) comprises two parallel wall sections (2, 3) which are provided with the guide slots (6) and which are spaced from each other by a distance adapted to the disc diameter of the workpieces (7), the long sides of said wall sections constituting the lower and the upper side and the short sides constituting the front and the rear side of the disc magazine, in that further the mutually aligned inner guide slots of the wall sections extend parallel to the short sides and the wall sections are fixed relative to each other by means of spacers (4) at their edge portions near the lower long sides, and in that disc-shaped workpieces (7) which can be inserted into the guide slots at the upper side of the disc magazine abut against a stop (8) in the form of a rod arranged on the inner side of the wall sections perpendicularly to the guide slots.

3. A transport device as claimed in Claim 1 or 2, characterized in that scanning device (13) which scans the identification code of the identification disc (10) comprises three light barriers (14, 15, 16) as scanning means, of which two light barriers (15, 16) are assigned to a zone which exhibits the actual identification code, whilst the third light barrier (14) is oriented towards an area outside said zone.

4. A transport device as claimed in Claim 1 or 2, characterized in that the zone which exhibits the identification code of the identification disc (10) is a concentric annular zone (17), which in the circumferential direction alternately comprises shorter and longer zone portions of strongly differing light transmission such that at least one of two light barriers (15, 16), which are disposed at a distance of an annular-zone diameter from each other, concentrically with the identification disc and perpendicularly to the plane of the identification disc, is closed or open independently of the rotational position of the identification disc.

5. A transport device as claimed in Claim 4, characterized in that the identification disc (10) has a light-reflecting surface and in that only the longer zone portions of the annular zone (17) are light-transmitting.

6. A transport device as claimed in Claim 4 or 5, characterized in that the longer zone portions of the annular zone (17) are slots (12).

## Revendications

1. Dispositif de transport pour la fabrication en masse de supports d'informations en forme de disques à haute densité de stockage, en particulier d'audiodisques numériques à lecture optique (CD), avec l'aide de magasins à disques recevant les pièces en forme de disques, qui peuvent progresser d'un poste de travail à un autre sur des chariots transporteurs ou des bandes transporteuses, caractérisé en ce que les magasins à disques (1) quadrangulaires, ouverts, comportant dans leurs faces internes des rainures de guidage (6) parallèles entre elles pour recevoir les pièces en forme de disques (7), présentent, grâce à l'utilisation additionnelle d'organes d'ajustage (5), par exemple de pivots ou d'évidements, un ordre de traitement prédéfini de manière fixe pour les piles de pièces (9) qu'ils contiennent, dans tous les postes de travail (A, B,... I), qu'en outre, chaque pile de pièces et ainsi chaque magasin à disques recevant une telle pile comporte un disque d'identification (10) adapté à la forme d'une pièce, qui occupe alors la première place dans l'ordre prédéfini de manière fixe dans une pile de pièces à l'intérieur d'un magasin à disques et que dans un poste de travail, du côté d'entrée, le disque d'identification est d'abord extrait du magasin à disques en vue de son interrogation au moyen d'un dispositif de lecture (13), puis les pièces en sont extraites successivement en vue de leur traitement dans l'ordre fixe de la pile de pièces et, du côté de sortie, le disque d'identification et les pièces sont réintroduits dans un magasin à disques dans le même ordre.

2. Dispositif de transport suivant la revendication 1, caractérisé en ce qu'un magasin à disques (1) quadrangulaire est formé de deux parois (2, 3) parallèles l'une à l'autre, espacées du diamètre des pièces (7) et présentant les rainures de guidage (6), les longs chants des parois formant le côté inférieur et le côté supérieur et leurs petits chants formant le côté antérieur et le côté postérieur du magasin à disques, qu'en outre, les rainures de guidage internes des parois qui sont en ligne l'une avec l'autre s'étendent parallèlement aux petits chants et les parois sont fixées l'une à l'autre dans la zone marginale des longs chants inférieurs par des organes d'entretoisement (4) et que les pièces en forme de disques (7) pouvant être introduites au niveau du côté supérieur du magasin à disques dans les rainures de guidage viennent se poser contre une butée (8) ayant la forme d'une tige disposée contre la face interne des parois perpendiculairement aux rainures de guidage.

3. Dispositif de transport suivant la revendication 1 ou 2, caractérisé en ce que le dispositif de lecture (13) analysant l'identification du disque d'identification (10) comporte en tant qu'analyseur, trois barrières lumineuses (14, 15, 16) parmi lesquelles deux barrières (15, 16) sont associées à un domaine zonal présentant l'identification proprement dite, tandis que la troisième barrière (14) est orientée sur une zone du disque d'identification située en dehors de ce domaine zonal.

4. Dispositif de transport suivant la revendication 1 ou 2, caractérisé en ce que le domaine zonal présentant l'identification sur le disque d'identification (10) est une zone annulaire concentrique (17) qui se compose de sections de zone plus courtes et plus longues alternant dans le sens circonférentiel, dont la transparence est fort différente et dont la configuration est telle que, parmi deux barrières lumineuses (15, 16), séparées l'une de l'autre d'une distance égale à un diamètre de zone annulaire, concentriques au disque d'identification et perpendiculaires au plan de ce disque, au moins une est fermée ou ouverte indépendamment de la position angulaire du disque d'identification.

5. Dispositif de transport suivant la revendication 4, caractérisé en ce que le disque d'identification (10) présente une surface réfléchissant la lumière et que seules les longues sections zonales de la zone annulaire (17) sont transparentes.

6. Dispositif de transport suivant la revendication 4 ou 5, caractérisé en ce que les longues sections zonales de la zone annulaire (17) sont des boutonnières (12).

FIG 1

FIG 2

FIG 3

# FIG 4